# EUROPÄISCHE PATENTANMELDUNG

(11) **EP 4 674 244 A1**
(43) Veröffentlichungstag der Anmeldung: **07.01.2026**
(21) Anmeldenummer: 24186967.6
(22) Anmeldetag: 05.07.2024
(51) Int. Cl.: A01B 69/00, G06V 20/10, G06V 20/56, A01B 69/04

(54) **VERFAHREN ZUR OPTISCHEN VORABERFASSUNG EINES ZU BEARBEITENDEN FELDBEREICHS**

(71) Anmelder: Deere & Company, Moline, IL 61265 (US)
(72) Erfinder: Brocke, Stefan, Mannheim (DE); Gandhi, Danesh, Mannheim (DE)
(74) Vertreter: Dehnhardt, Florian Christopher

(57) **Zusammenfassung**

Verfahren zur optischen Voraberfassung eines zu bearbeitenden Feldbereichs (66), bei dem ein landwirtschaftliches Arbeitsfahrzeug (12) mit einer ersten bildgebenden Sensoreinheit (34) und eine fernsteuerbare Drohne (38) mit einer zweiten bildgebenden Sensoreinheit (40) ausgestattet ist, wobei von der ersten bildgebenden Sensoreinheit (34) ein in Fahrtrichtung (46) vorausliegender erster Feldbereichsabschnitt (48) und von der zweiten bildgebenden Sensoreinheit (40) ein in Fahrtrichtung (46) vorausliegender zweiter Feldbereichsabschnitt (50) erfasst sowie mittels einer Positionsbestimmungseinheit (44) eine relative Lage und/oder Orientierung der beiden bildgebenden Sensoreinheiten (34, 40) zueinander ermittelt wird, wobei von der ersten und zweiten bildgebenden Sensoreinheit (34, 40) bereitgestellte Bilddaten an eine Kontrolleinheit (16) übermittelt werden, die diese zur Erzeugung einer über ein Grafisches Nutzerinterface (24) zu visualisierenden Komplettansicht der beiden erfassten Feldbereichsabschnitte (48, 50) unter Berücksichtigung der ermittelten relativen Lage und/oder Orientierung der beiden bildgebenden Sensoreinheiten (34, 40) miteinander fusioniert.

## Beschreibung

Die Erfindung betrifft ein Verfahren zur optischen Voraberfassung eines zu bearbeitenden Feldbereichs.

Gerade bei landwirtschaftlichen Arbeitsfahrzeugen wie landwirtschaftlichen Traktoren, Feldhäckslern oder Erntemaschinen ist die Sicht auf einen in Fahrtrichtung liegenden, mittels des landwirtschaftlichen Arbeitsfahrzeugs zu bearbeitenden Feldbereich aufgrund von Anbau- oder Zusatzgeräten, beispielsweise eines Schiebeschilds, eines Mähwerks oder eines Erntevorsatzes, aber auch aufgrund der Fahrzeugumrisse selbst, mehr oder minder eingeschränkt. Abhilfe schaffen hier unter anderem Kameras, die an einer geeigneten Stelle des landwirtschaftlichen Arbeitsfahrzeugs bzw. des Anbau- oder Zusatzgeräts angebracht sind und so den Sichtbereich in Fahrtrichtung des landwirtschaftlichen Arbeitsfahrzeugs durch Erzeugung eines entsprechenden Kamerabilds auf einem separaten Display erweitern.

Vor diesem Hintergrund ist es Aufgabe der vorliegenden Erfindung, ein hinsichtlich des Fahrernutzens weiter verbessertes Verfahren der eingangs genannten Art anzugeben.

Diese Aufgabe wird durch ein Verfahren zur optischen Voraberfassung eines zu bearbeitenden Feldbereichs mit den Merkmalen des Patentanspruchs 1 gelöst.

Bei dem Verfahren zur optischen Voraberfassung eines zu bearbeitenden Feldbereichs ist vorgesehen, dass ein landwirtschaftliches Arbeitsfahrzeug mit einer ersten bildgebenden Sensoreinheit und eine fernsteuerbare Drohne mit einer zweiten bildgebenden Sensoreinheit ausgestattet ist, wobei von der ersten bildgebenden Sensoreinheit ein in Fahrtrichtung vorausliegender erster Feldbereichsabschnitt und von der zweiten bildgebenden Sensoreinheit ein in Fahrtrichtung vorausliegender zweiter Feldbereichsabschnitt erfasst sowie mittels einer Positionsbestimmungseinheit eine relative Lage und/oder Orientierung der beiden bildgebenden Sensoreinheiten zueinander ermittelt wird, wobei von der ersten und zweiten bildgebenden Sensoreinheit bereitgestellte Bilddaten an eine Kontrolleinheit übermittelt werden, die diese zur Erzeugung einer über ein Grafisches Nutzerinterface zu visualisierenden Komplettansicht der beiden erfassten Feldbereichsabschnitte unter Berücksichtigung der ermittelten relativen Lage und/oder Orientierung der beiden bildgebenden Sensoreinheiten miteinander fusioniert.

Diese Vorgehensweise macht es möglich, einen in Fahrtrichtung vorausliegenden Feldbereich in seiner Gesamtheit und damit in für den Fahrer besonders übersichtlicher Art und Weise auf dem Grafischen Nutzerinterface darzustellen. Die jeweiligen Bilddaten werden hierzu mit dem Ziel einer lückenlosen bzw. einander ergänzenden Wiedergabe der beiden Feldbereichsabschnitte von der Kontrolleinheit bzw. einem dem Grafischen Nutzerinterface zugeordneten Grafikrechner miteinander deckend überlappt, wozu zugleich die relative Lage und/oder Orientierung der beiden bildgebenden Sensoreinheiten und damit deren "Blickrichtung" zueinander einbezogen wird.

Bei dem Grafischen Nutzerinterface kann es sich um ein konventionelles berührungsempfindliches Display handeln, es ist jedoch auch die Verwendung eines Head-up-Displays denkbar, das die visuelle Darstellung der Komplettansicht des in Fahrtrichtung vorausliegenden Feldbereichs durch Einblenden in eine Kabinenfrontscheibe des landwirtschaftlichen Arbeitsfahrzeugs und damit unmittelbar ins Blickfeld des Fahrers erlaubt.

Die erste bildgebende Sensoreinheit ist fahrzeugfest derart angeordnet, dass diese eine Erfassung des ersten Feldbereichsabschnitts über die Außenkonturen des landwirtschaftlichen Arbeitsfahrzeugs bzw. eines daran angebrachten Anbau- oder Zusatzgeräts hinweg nach vorne (oder hinten) zulässt. Die zweite bildgebende Sensoreinheit ist indes mitsamt der Positionsbestimmungseinheit der Drohne zugeordnet, mithin hinsichtlich ihrer räumlichen Positionierung gegenüber dem landwirtschaftlichen Arbeitsfahrzeug mobil bzw. flexibel, was eine vollständige Erfassung des für den Blick des Fahrers zumindest teilweise verdeckten zweiten Feldbereichsabschnitts ermöglicht. Der Flug der Drohne wird insbesondere von der Kontrolleinheit über eine Funkverbindung koordiniert bzw. ferngesteuert. Bei den beiden bildgebenden Sensoreinheiten handelt es sich typischerweise um Mono- oder Stereokameras.

Die Angabe der Fahrtrichtung bezieht sich vorliegend auf eine beabsichtigte oder tatsächliche Vorwärtsfahrt des landwirtschaftlichen Arbeitsfahrzeugs, diese kann jedoch grundsätzlich auch eine Rückwärtsfahrt betreffen.

Bei dem landwirtschaftlichen Arbeitsfahrzeug kann es sich unter anderem um einen landwirtschaftlichen Traktor, einen Feldhäcksler oder eine Erntemaschine handeln, bei dem daran anbringbaren bzw. angebrachten Anbau- oder Zusatzgerät um ein Schiebeschild, ein Mähwerk, einen Erntevorsatz oder ähnliches.

Vorteilhafte Weiterbildungen des erfindungsgemäßen Verfahrens gehen aus den Unteransprüchen hervor.

Zur Ermittlung der relativen Lage und/oder Orientierung der beiden bildgebenden Sensoreinheiten wird die Nutzung der ohnehin vorhandenen zweiten bilderfassenden Sensoreinheit bevorzugt. Hierzu ist vorgesehen, dass von der Positionsbestimmungseinheit aus den Bilddaten der zweiten bildgebenden Sensoreinheit eine räumliche Position einer an dem landwirtschaftlichen Arbeitsfahrzeug angebrachten optischen Markierung gegenüber der zweiten bildgebenden Sensoreinheit abgeleitet wird, wobei die abgeleitete räumliche Position von der Positionsbestimmungseinheit zur Ermittlung der relativen Lage und/oder Orientierung der beiden bildgebenden Sensoreinheiten auf die räumliche Position der ersten bildgebenden Sensoreinheit transformiert wird. Die räumliche Position der gegenüber der ersten bildgebenden Sensoreinheit an geeigneter, d.h. im Blickfeld der zweiten bildgebenden Sensoreinheit liegender Stelle des landwirtschaftlichen Arbeitsfahrzeugs angebrachten optischen Markierung lässt sich hierbei durch Bildanalyse bzw. Triangulation ihres sensorisch erfassten Abbilds in Verbindung mit der aktuellen Fluglage der Drohne ableiten. Die aktuelle Fluglage der Drohne kann mittels einer von dieser umfassten Inertialen Messeinheit bzw. IMU (Inertial Measurement Unit) ermittelt werden.

Die Bilddaten der zweiten bildgebenden Sensoreinheit können anschließend gemeinsam mit von der Positionsbestimmungseinheit bereitgestellten Informationen hinsichtlich der ermittelten relativen Lage und/oder Orientierung der beiden bildgebenden Sensoreinheiten über eine mit der Positionsbestimmungseinheit kommunizierende Datenschnittstelle drahtlos an die Kontrolleinheit zur weiteren Auswertung übermittelt werden. Die Datenschnittstelle kann zugleich der Fernsteuerung der Drohne dienen.

Bei der optischen Markierung handelt es sich beispielsweise um einen QR-Code. Der QR-Code erlaubt zugleich eine Zuweisung von mittels der zweiten bildgebenden Sensoreinheit auslesbaren Merkmalen. Diese können der Fahrzeugidentifikation dienen, beispielsweise für den Fall, dass ein und dieselbe Drohne zur Durchführung des erfindungsgemäßen Verfahrens für mehrere (unterschiedliche) landwirtschaftliche Arbeitsfahrzeuge eingesetzt wird und aufgrund dessen eine entsprechende Anpassung einer gegenüber dem betreffenden landwirtschaftlichen Arbeitsfahrzeug einzunehmenden räumlichen Soll-Flugposition erforderlich ist.

Im einfachsten Fall kann die Kontrolleinheit Bestandteil einer bereits vorhandenen Steuergerätearchitektur des landwirtschaftlichen Arbeitsfahrzeugs sein.

Auch kann vorgesehen sein, dass die Kontrolleinheit mit einem zentralen Datenserver kommuniziert, wobei die von der ersten und zweiten bildgebenden Sensoreinheit bereitgestellten Bilddaten zusammen mit den von der Positionsbestimmungseinheit bereitgestellten Informationen hinsichtlich der ermittelten relativen Lage und/oder Orientierung der beiden bildgebenden Sensoreinheiten unter gleichzeitiger Verortung mit der aktuellen kartografischen Position des landwirtschaftlichen Arbeitsfahrzeugs über eine weitere Datenschnittstelle drahtlos an den zentralen Datenserver und von dort nach ihrer Fusionierung zur Visualisierung der erzeugten Komplettansicht über die Kontrolleinheit an das Grafische Nutzerinterface bzw. den Grafikrechner im landwirtschaftlichen Arbeitsfahrzeug rückübermittelt werden. Die Ermittlung der aktuellen kartografischen Position des landwirtschaftlichen Arbeitsfahrzeugs erfolgt mittels eines GPS-Navigationssystems.

Die Verwendung eines zentralen Datenservers erlaubt die Bereitstellung höherer Rechenleistungen sowie (im Rahmen einer erweiterten bzw. hinzubuchbaren Serviceleistung) eine vereinfachte Kombination der zu fusionierenden Bilddaten mit auf dem Grafischen Nutzerinterface darzustellenden Zusatzinformationen aus weiteren Datenquellen, beispielsweise hinsichtlich von Wettereinflüssen, phänotypischen Merkmalen einer zu bearbeitenden Anpflanzung und dergleichen. Zur Analyse phänotypischer Merkmale, insbesondere im Rahmen eines Bonitursystems zur Pflanzenzustandsbewertung mittels künstlicher Intelligenz, kann sich die Sensitivität der bildgebenden Sensoreinheiten über den sichtbaren Wellenlängenbereich in den Nahinfrarotbereich hinaus erstrecken. Die Visualisierung der aus den Bilddaten gewonnenen phänotypischen Merkmale auf dem Grafischen Nutzerinterface kann in Falschfarben erfolgen. Grundsätzlich ist die Verwirklichung derartiger Zusatzfunktionen auch durch die Kontrolleinheit selbst möglich, wobei in diesem Fall die auf dem Grafischen Nutzerinterface darzustellenden Zusatzinformationen vom zentralen Datenserver über die weitere Datenschnittstelle der Kontrolleinheit zur entsprechenden Einbeziehung zur Verfügung gestellt werden.

Des Weiteren besteht die Möglichkeit, dass die von der Positionsbestimmungseinheit bereitgestellten Informationen hinsichtlich der ermittelten relativen Lage und/oder Orientierung der beiden bildgebenden Sensoreinheiten zur Flugsteuerung der Drohne, insbesondere zur Einhaltung einer vorgegebenen räumlichen Flugposition gegenüber dem landwirtschaftlichen Arbeitsfahrzeug herangezogen werden. Hierzu erfolgt eine Erzeugung von korrigierenden Regelungsbefehlen ausgehend von einer gegenüber der räumlichen Soll-Flugposition festgestellten Abweichung.

Weiterhin machen es die unterschiedlichen "Blickrichtungen" der beiden bildgebenden Sensoreinheiten möglich, dass aus den fusionierten Bilddaten von der Kontrolleinheit bei der Erzeugung der Komplettansicht eine dreidimensionale Oberflächenkontur des zu bearbeitenden Feldbereichs einschließlich darauf befindlicher Hindernisse synthetisiert wird. Der Verlauf des zu bearbeitenden Feldbereichs ist so für den Fahrer besonders sicher beurteilbar.

Vor einem ähnlichen Hintergrund kann zusätzlich oder alternativ bei der Erzeugung der Komplettansicht von der Kontrolleinheit eine sensorisch erfasste Horizontallage des landwirtschaftlichen Arbeitsfahrzeugs berücksichtigt werden. Die sensorische Erfassung der Horizontallage ergibt sich aus von einer fahrzeugfesten Inertialen Messeinheit bzw. IMU bereitgestellten Informationen hinsichtlich eines aktuellen Wankwinkels, Nickwinkels und/oder Gierwinkels des landwirtschaftlichen Arbeitsfahrzeugs.

Auch kann bei der Erzeugung der Komplettansicht von der Kontrolleinheit eine zumindest umrissartige Visualisierung des landwirtschaftlichen Arbeitsfahrzeugs sowie eines gegebenenfalls daran angebrachten Anbau- oder Zusatzgeräts erfolgen. Die Bilddaten der zweiten bildgebenden Sensoreinheit erlauben hierbei die Bereitstellung einer Aufsichtdarstellung aus Sicht der Drohne aus Vogelperspektive.

Das erfindungsgemäße Verfahren wird im Folgenden anhand der beigefügten Zeichnungen näher erläutert. Es zeigen:
- Fig. 1: ein als Flussdiagramm veranschaulichtes Ausführungsbeispiel des erfindungsgemäßen Verfahrens zur optischen Voraberfassung eines zu bearbeitenden Feldbereichs, und
- Fig. 2: ein schematisch dargestelltes Ausführungsbeispiel einer Einrichtung zur Durchführung des in Fig. 1 wiedergegebenen erfindungsgemäßen Verfahrens.

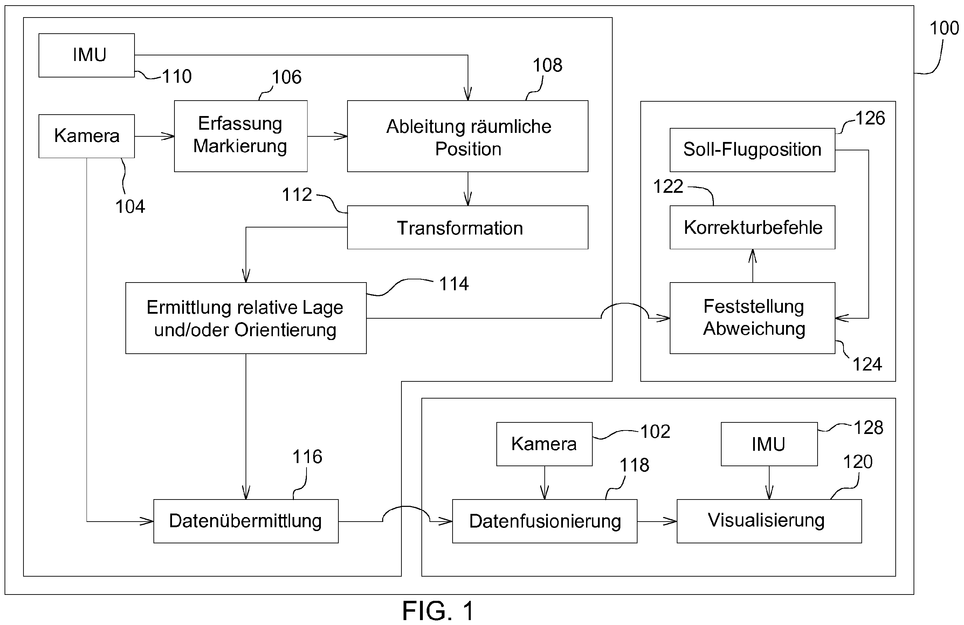

Fig. 1 zeigt ein als Flussdiagramm veranschaulichtes Ausführungsbeispiel des erfindungsgemäßen Verfahrens zur optischen Voraberfassung eines zu bearbeitenden Feldbereichs.

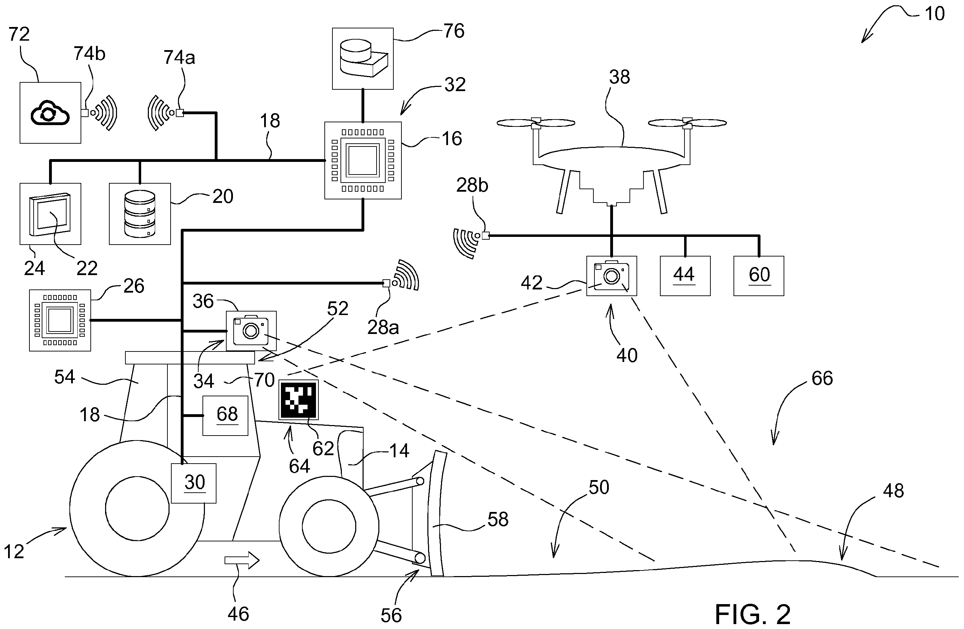

Zunächst soll auf die zu dessen Durchführung vorgesehene Einrichtung 10 entsprechend Fig. 2 eingegangen werden. Die einem landwirtschaftlichen Arbeitsfahrzeug 12, vorliegend einem landwirtschaftlichen Traktor 14 zugeordnete Einrichtung 10 umfasst eine mikroprozessorgesteuerte Kontrolleinheit 16, die über ein BUS-System 18 mit einer internen Speichereinheit 20, einem als berührungsempfindliches Display 22 ausgebildeten Grafischen Nutzerinterface 24 mit einem Grafikrechner 26, einer Datenschnittstelle 28a, 28b sowie einer fahrzeugfesten Inertialen Messeinheit bzw. IMU 30 in Datenaustauschverbindung steht. Hierbei ist die Kontrolleinheit 16 Bestandteil einer nicht näher dargestellten Steuergerätearchitektur 32 des landwirtschaftlichen Traktors 14.

Des Weiteren ist der landwirtschaftliche Traktor 14 mit einer ersten bildgebenden Sensoreinheit 34 in Gestalt einer ersten Mono- oder Stereokamera 36 und eine fernsteuerbare Drohne 38 mit einer zweiten bildgebenden Sensoreinheit 40 in Gestalt einer zweiten Mono- oder Stereokamera 42 sowie einer Positionsbestimmungseinheit 44 ausgestattet. Wie in Fig. 2 zu erkennen ist, wird von der ersten bildgebenden Sensoreinheit 34 ein in Fahrtrichtung 46 vorausliegender erster Feldbereichsabschnitt 48 und von der zweiten bildgebenden Sensoreinheit 40 ein in Fahrtrichtung 46 vorausliegender zweiter Feldbereichsabschnitt 50 erfasst.

Die erste bildgebende Sensoreinheit 34 ist fahrzeugfest derart erhöht in einem vorderen Dachbereich 52 einer Fahrerkabine 54 des landwirtschaftlichen Traktors 14 angeordnet, dass diese eine Erfassung des ersten Feldbereichsabschnitts 48 über die Außenkonturen des landwirtschaftlichen Traktors 14 bzw. eines daran angebrachten Anbau- oder Zusatzgeräts 56 hinweg nach vorne zulässt. Bei dem Anbau- oder Zusatzgerät 56 handelt es sich beispielhaft um ein Schiebeschild 58. Die zweite bildgebende Sensoreinheit 40 ist indes der Drohne 38 zugeordnet und damit hinsichtlich ihrer räumlichen Positionierung gegenüber dem landwirtschaftlichen Traktor 14 mobil bzw. flexibel, was eine vollständige Erfassung des für den Blick des Fahrers zumindest teilweise verdeckten zweiten Feldbereichsabschnitts 50 ermöglicht. Der Flug der Drohne 38 wird von der Kontrolleinheit 16 über die mittels der Datenschnittstelle 28a, 28b hergestellte Funkverbindung koordiniert bzw. ferngesteuert. Zur Ermittlung der aktuellen Fluglage der Drohne 38 umfasst diese ebenfalls eine Inertiale Messeinheit bzw. IMU 60.

An dem landwirtschaftlichen Traktor 14 ist an geeigneter, d.h. im Blickfeld der zweiten bildgebenden Sensoreinheit 40 liegender Stelle eine optische Markierung 62 angebracht. Bei der optischen Markierung 62 handelt es sich beispielsgemäß um einen QR-Code 64, der als Aufkleber auf einer Oberseite einer Motorhaube des landwirtschaftlichen Traktors 14 aufgebracht ist.

Der Vollständigkeit halber sei angemerkt, dass sich die Angabe der Fahrtrichtung 46 vorliegend auf eine beabsichtigte oder tatsächliche Vorwärtsfahrt des landwirtschaftlichen Traktors 14 bezieht, diese kann jedoch grundsätzlich auch eine Rückwärtsfahrt betreffen.

Zudem soll die Darstellung des landwirtschaftlichen Arbeitsfahrzeugs 12 als landwirtschaftlicher Traktor 14 lediglich beispielhaften Charakter aufweisen. Neben einem landwirtschaftlichen Traktor 14 kann es sich auch um ein beliebiges anderes landwirtschaftliches Arbeitsfahrzeug 12, wie zum Beispiel einen Feldhäcksler oder eine Erntemaschine handeln, bei dem daran anbringbaren bzw. angebrachten Anbau- oder Zusatzgerät 56 anstelle eines Schiebeschilds 58 um ein Mähwerk, einen Erntevorsatz oder ähnliches.

Unter Bezugnahme auf das in Fig. 1 wiedergegebene Flussdiagramm wird das von der Kontrolleinheit 16 durchgeführte und als entsprechender Programmcode in der internen Speichereinheit 20 abgelegte Verfahren in einem übergeordneten Startschritt 100 vom Bediener durch Aufrufen eines Kameraassistenzmodus über das berührungsempfindliche Display 22 des Grafischen Nutzerinterface 24 gestartet, woraufhin in einem ersten Hauptschritt 102 die erste bildgebende Sensoreinheit 34 und in einem zweiten Hauptschritt 104 die zweite bildgebende Sensoreinheit 40 zur Erfassung des in ihrem jeweiligen Blickfeld liegenden Feldbereichsabschnitts 48, 50 initiiert wird.

In einem dritten Hauptschritt 106 erfolgt seitens der zweiten bildgebenden Sensoreinheit 40 weiterhin die Erfassung der in ihrem Blickfeld liegenden optischen Markierung 62, um in einem vierten Hauptschritt 108 aus den Bilddaten der zweiten bildgebenden Sensoreinheit 40 die räumliche Position der optischen Markierung 62 gegenüber der zweiten bildgebenden Sensoreinheit 40 durch Bildanalyse bzw. Triangulation ihres sensorisch erfassten Abbilds in Verbindung mit der aktuellen Fluglage der Drohne 38 abzuleiten. Die aktuelle Fluglage der Drohne 38 wird in einem ersten Nebenschritt 110 mittels der von dieser umfassten Inertialen Messeinheit 60 ermittelt. Da die optische Markierung 62 gegenüber der ersten bildgebenden Sensoreinheit 34 am landwirtschaftlichen Traktor 14 versetzt angebracht ist, wird die im vierten Hauptschritt 108 abgeleitete räumliche Position der optischen Markierung 62 gegenüber der zweiten bildgebenden Sensoreinheit 40 in einem fünften Hauptschritt 112 von der Positionsbestimmungseinheit 44 zunächst auf die räumliche Position der ersten bildgebenden Sensoreinheit 34 transformiert, um davon ausgehend in einem sechsten Hauptschritt 114 eine relative Lage und/oder Orientierung der beiden bildgebenden Sensoreinheiten 34, 40 zueinander zu ermitteln.

Die im sechsten Hauptschritt 114 von der Positionsbestimmungseinheit 44 bereitgestellten Informationen hinsichtlich der ermittelten relativen Lage und/oder Orientierung der beiden bildgebenden Sensoreinheiten 34, 40 werden in einem siebten Hauptschritt 116 mit den von der zweiten bildgebenden Sensoreinheit 40 bereitgestellten Bilddaten über die Datenschnittstelle 28a, 28b drahtlos an das BUS-System 18 des landwirtschaftlichen Traktors 14 und von dort gemeinsam mit den im ersten Hauptschritt 102 von der ersten bildgebenden Sensoreinheit 34 bereitgestellten Bilddaten an die Kontrolleinheit 16 übermittelt.

In einem von der Kontrolleinheit 16 ausgeführten achten Hauptschritt 118 werden diese zur Erzeugung einer in einem neunten Hauptschritt 120 über das Grafisches Nutzerinterface 24 zu visualisierenden Komplettansicht der beiden erfassten Feldbereichsabschnitte 48, 50 unter Berücksichtigung der ermittelten relativen Lage und/oder Orientierung der beiden bildgebenden Sensoreinheiten 34, 40 miteinander fusioniert.

Diese Vorgehensweise macht es möglich, den in Fahrtrichtung 46 vorausliegenden Feldbereich 66 in seiner Gesamtheit und damit in für den Fahrer besonders übersichtlicher Art und Weise auf dem Grafischen Nutzerinterface 24 darzustellen. Die jeweiligen Bilddaten werden hierzu mit dem Ziel einer lückenlosen bzw. einander ergänzenden Wiedergabe der beiden Feldbereichsabschnitte 48, 50 von der Kontrolleinheit 16 bzw. dem Grafikrechner 26 miteinander deckend überlappt, wozu zugleich die relative Lage und/oder Orientierung der beiden bildgebenden Sensoreinheiten 34, 30 und damit deren "Blickrichtung" zueinander einbezogen wird.

In diesem Zusammenhang soll erwähnt werden, dass anstelle der Visualisierung der Komplettansicht auf einem konventionellen Display 22 auch die Verwendung eines Head-up-Displays 68 denkbar ist, das die visuelle Darstellung der Komplettansicht des in Fahrtrichtung 46 vorausliegenden Feldbereichs 66 durch Einblenden in eine Kabinenfrontscheibe 70 des landwirtschaftlichen Traktors 14 und damit unmittelbar ins Blickfeld des Fahrers erlaubt (siehe Fig. 2).

Daneben ist vorgesehen, dass die von der Positionsbestimmungseinheit 44 bereitgestellten Informationen hinsichtlich der ermittelten relative Lage und/oder Orientierung der beiden bildgebenden Sensoreinheiten 34, 40 zur Flugsteuerung der Drohne 38, namentlich zur Einhaltung einer vorgegebenen räumlichen Flugposition gegenüber dem landwirtschaftlichen Traktor 14 herangezogen wird. Hierzu erfolgt in einem zweiten Nebenschritt 122 eine Erzeugung von korrigierenden Regelungsbefehlen ausgehend von einer in einem dritten Nebenschritt 124 gegenüber der räumlichen Soll-Flugposition festgestellten Abweichung. Die Vorgabe der räumlichen Soll-Flugposition erfolgt hierbei in einem vierten Nebenschritt 126 und ist für das betreffende landwirtschaftliche Arbeitsfahrzeug 12 spezifisch.

Hinsichtlich der Darstellungsweise der Komplettansicht auf dem Grafische Nutzerinterface 24 kommen verschiedene Optionen in Frage.

Zunächst machen es die unterschiedlichen "Blickrichtungen" der beiden bildgebenden Sensoreinheiten 34, 30 möglich, dass aus den fusionierten Bilddaten von der Kontrolleinheit 16 bei der Erzeugung der Komplettansicht eine dreidimensionale Oberflächenkontur des zu bearbeitenden Feldbereichs 66 einschließlich darauf befindlicher Hindernisse synthetisiert wird. Der Verlauf des zu bearbeitenden Feldbereichs 66 ist so für den Fahrer besonders sicher beurteilbar.

Vor einem ähnlichen Hintergrund wird zusätzlich oder alternativ bei der Erzeugung der Komplettansicht von der Kontrolleinheit 16 eine sensorisch erfasste Horizontallage des landwirtschaftlichen Traktors 14 berücksichtigt. Die sensorische Erfassung der Horizontallage ergibt sich aus in einem fünften Nebenschritt 128 von der fahrzeugfesten Inertialen Messeinheit 30 bereitgestellten Informationen hinsichtlich eines aktuellen Wankwinkels, Nickwinkels und/oder Gierwinkels des landwirtschaftlichen Traktors 14.

Auch kann bei der Erzeugung der Komplettansicht von der Kontrolleinheit 16 eine zumindest umrissartige Visualisierung des landwirtschaftlichen Traktors 14 sowie des daran angebrachten Anbau- oder Zusatzgeräts 56 erfolgen. Die Bilddaten der zweiten bildgebenden Sensoreinheit 40 erlauben hierbei die Bereitstellung einer Aufsichtdarstellung aus Sicht der Drohne 38 aus Vogelperspektive.

Dem QR-Code 64 sind zugleich von mittels der zweiten bildgebenden Sensoreinheit 40 auslesbare Merkmale zugewiesen. Diese dienen der Fahrzeugidentifikation, und zwar für den Fall, dass ein und dieselbe Drohne 38 zur Durchführung des erfindungsgemäßen Verfahrens für mehrere (unterschiedliche) landwirtschaftliche Arbeitsfahrzeuge 12 eingesetzt wird und aufgrund dessen eine entsprechende Anpassung einer gegenüber dem betreffenden landwirtschaftlichen Arbeitsfahrzeug 12 einzunehmenden räumlichen Soll-Flugposition erforderlich ist.

Entsprechend einer in Fig. 2 strichliniert angedeuteten Abwandlung der Einrichtung 10 ist vorgesehen, dass die Kontrolleinheit 16 mit einem zentralen Datenserver 72 kommuniziert, wobei die von der ersten und zweiten bildgebenden Sensoreinheit 34, 40 bereitgestellten Bilddaten zusammen mit den von der Positionsbestimmungseinheit 44 bereitgestellten Informationen hinsichtlich der relativen Lage und/oder Orientierung der beiden bildgebenden Sensoreinheiten 34, 40 unter gleichzeitiger Verortung mit der aktuellen kartografischen Position des landwirtschaftlichen Traktors 14 über eine weitere Datenschnittstelle 74a, 74b drahtlos an den zentralen Datenserver 72 und von dort nach ihrer Fusionierung zur Visualisierung der erzeugten Komplettansicht über die Kontrolleinheit 16 an das Grafische Nutzerinterface 24 bzw. den Grafikrechner 26 im landwirtschaftlichen Traktor 14 rückübermittelt werden. Die Ermittlung der aktuellen kartografischen Position des landwirtschaftlichen Traktors erfolgt mittels eines GPS-Navigationssystems 76.

Die Verwendung eines zentralen Datenservers 72 erlaubt die Bereitstellung höherer Rechenleistungen sowie (im Rahmen einer erweiterten bzw. hinzubuchbaren Serviceleistung) eine vereinfachte Kombination der zu fusionierenden Bilddaten mit auf dem Grafischen Nutzerinterface 24 darzustellenden Zusatzinformationen aus weiteren Datenquellen, beispielsweise hinsichtlich von Wettereinflüssen, phänotypischen Merkmalen einer zu bearbeitenden Anpflanzung und dergleichen. Zur Analyse phänotypischer Merkmale, insbesondere im Rahmen eines Bonitursystems zur Pflanzenzustandsbewertung mittels künstlicher Intelligenz, kann sich die Sensitivität der bildgebenden Sensoreinheiten 34, 40 über den sichtbaren Wellenlängenbereich in den Nahinfrarotbereich hinaus erstrecken. Die Visualisierung der aus den Bilddaten gewonnenen phänotypischen Merkmale auf dem Grafischen Nutzerinterface 24 kann in Falschfarben erfolgen. Grundsätzlich ist die Verwirklichung derartiger Zusatzfunktionen auch durch die Kontrolleinheit 16 selbst möglich, wobei in diesem Fall die auf dem Grafischen Nutzerinterface 24 darzustellenden Zusatzinformationen vom zentralen Datenserver 72 über die weitere Datenschnittstelle 74a, 74b der Kontrolleinheit 16 zur entsprechenden Einbeziehung zur Verfügung gestellt werden.

## Patentansprüche

1. Verfahren zur optischen Voraberfassung eines zu bearbeitenden Feldbereichs, bei dem ein landwirtschaftliches Arbeitsfahrzeug (12) mit einer ersten bildgebenden Sensoreinheit (34) und eine fernsteuerbare Drohne (38) mit einer zweiten bildgebenden Sensoreinheit (40) ausgestattet ist, wobei von der ersten bildgebenden Sensoreinheit (34) ein in Fahrtrichtung (46) vorausliegender erster Feldbereichsabschnitt (48) und von der zweiten bildgebenden Sensoreinheit (40) ein in Fahrtrichtung (46) vorausliegender zweiter Feldbereichsabschnitt (50) erfasst sowie mittels einer Positionsbestimmungseinheit (44) eine relative Lage und/oder Orientierung der beiden bildgebenden Sensoreinheiten (34, 40) zueinander ermittelt wird, wobei von der ersten und zweiten bildgebenden Sensoreinheit (34, 40) bereitgestellte Bilddaten an eine Kontrolleinheit (16) übermittelt werden, die diese zur Erzeugung einer über ein Grafisches Nutzerinterface (24) zu visualisierenden Komplettansicht der beiden erfassten Feldbereichsabschnitte (48, 50) unter Berücksichtigung der ermittelten relativen Lage und/oder Orientierung der beiden bildgebenden Sensoreinheiten (34, 40) miteinander fusioniert.

2. Verfahren nach Anspruch 1, **dadurch gekennzeichnet, dass** von der Positionsbestimmungseinheit (44) aus den Bilddaten der zweiten bildgebenden Sensoreinheit (40) eine räumliche Position einer an dem landwirtschaftlichen Arbeitsfahrzeug (12) angebrachten optischen Markierung (62) gegenüber der zweiten bildgebenden Sensoreinheit (40) abgeleitet wird, wobei die abgeleitete räumliche Position von der Positionsbestimmungseinheit (44) zur Ermittlung der relativen Lage und/oder Orientierung der beiden bildgebenden Sensoreinheiten (34, 40) auf die räumliche Position der ersten bildgebenden Sensoreinheit (34) transformiert wird.

3. Verfahren nach Anspruch 2, **dadurch gekennzeichnet, dass** es sich bei der optischen Markierung (62) um einen QR-Code (64) handelt.

4. Verfahren nach wenigstens einem der vorhergehenden Ansprüche, **dadurch gekennzeichnet, dass** die Bilddaten der zweiten bildgebenden Sensoreinheit (40) gemeinsam mit von der Positionsbestimmungseinheit (44) bereitgestellten Informationen hinsichtlich der ermittelten relativen Lage und/oder Orientierung der beiden bildgebenden Sensoreinheiten (34, 40) über eine mit der Positionsbestimmungseinheit (44) kommunizierende Datenschnittstelle (28a, 28b) drahtlos an die Kontrolleinheit (16) übermittelt werden.

5. Verfahren nach wenigstens einem der vorhergehenden Ansprüche, **dadurch gekennzeichnet, dass** die Kontrolleinheit (16) Bestandteil einer Steuergerätearchitektur (32) des landwirtschaftlichen Arbeitsfahrzeugs (12) ist.

6. Verfahren nach wenigstens einem der vorhergehenden Ansprüche, **dadurch gekennzeichnet, dass** die Kontrolleinheit (16) mit einem zentralen Datenserver (72) kommuniziert, wobei die von der ersten und zweiten bildgebenden Sensoreinheit (34, 40) bereitgestellten Bilddaten zusammen mit von der Positionsbestimmungseinheit (44) bereitgestellten Informationen hinsichtlich der ermittelten relativen Lage und/oder Orientierung der beiden bildgebenden Sensoreinheiten (34, 40) drahtlos an einen zentralen Datenserver (72) und von dort nach ihrer Fusionierung zur Visualisierung der erzeugten Komplettansicht über die Kontrolleinheit (16) an das Grafische Nutzerinterface (24) im landwirtschaftlichen Arbeitsfahrzeug (12) rückübermittelt werden.

7. Verfahren nach wenigstens einem der vorhergehenden Ansprüche, **dadurch gekennzeichnet, dass** von der Positionsbestimmungseinheit (44) bereitgestellte Informationen hinsichtlich der ermittelten relativen Lage und/oder Orientierung der beiden bildgebenden Sensoreinheiten (34, 40) zur Flugsteuerung der Drohne (38), insbesondere zur Einhaltung einer vorgegebenen räumlichen Flugposition gegenüber dem landwirtschaftlichen Arbeitsfahrzeug (12) herangezogen werden.

8. Verfahren nach wenigstens einem der vorhergehenden Ansprüche, **dadurch gekennzeichnet, dass** aus den fusionierten Bilddaten von der Kontrolleinheit (16) bei der Erzeugung der Komplettansicht eine dreidimensionale Oberflächenkontur des zu bearbeitenden Feldbereichs (66) einschließlich darauf befindlicher Hindernisse synthetisiert wird.

9. Verfahren nach wenigstens einem der vorhergehenden Ansprüche, **dadurch gekennzeichnet, dass** bei der Erzeugung der Komplettansicht von der Kontrolleinheit (16) eine sensorisch erfasste Horizontallage des landwirtschaftlichen Arbeitsfahrzeugs (12) berücksichtigt wird.

10. Verfahren nach wenigstens einem der vorhergehenden Ansprüche, **dadurch gekennzeichnet, dass** bei der Erzeugung der Komplettansicht von der Kontrolleinheit (16) eine zumindest umrissartige Visualisierung des landwirtschaftlichen Arbeitsfahrzeugs (12) sowie eines gegebenenfalls daran angebrachten Anbau- oder Zusatzgeräts (56) erfolgt.
